# EUROPÄISCHE PATENTSCHRIFT

(11) **EP 3 688 337 B1**
(45) Veröffentlichungstag und Bekanntmachung des Hinweises auf die Patenterteilung: **15.11.2023**
(21) Anmeldenummer: 18779330.2
(22) Anmeldetag: 24.09.2018
(51) Int. Cl.: F16G 13/16, H02G 3/04, H02G 11/00

(54) **FÜHRUNGSEINRICHTUNG**
GUIDE DEVICE
DISPOSITIF DE GUIDAGE

(30) Priorität: 28.09.2017 DE 202017105927 U
(43) Veröffentlichungstag der Anmeldung: 05.08.2020
(73) Patentinhaber: Igus GmbH, 51147 Köln (DE)
(72) Erfinder: JAEKER, Thilo-Alexander, 53757 Sankt Augustin (DE); BLASE, Frank, 51429 Bergisch Gladbach (DE); HOFFMANN, Jan, 53127 Bonn (DE)
(74) Vertreter: Lippert Stachow Patentanwälte Rechtsanwälte
(86) Internationale Anmeldenummer: PCT/EP2018/075811
(87) Internationale Veröffentlichungsnummer: WO 2019/063485

(56) Entgegenhaltungen:
- DE-A1- 19 817 125
- DE-A1-102014 110 508
- DE-U1- 29 706 670
- DE-U1-202014 103 562
- US-A1- 2011 013 978

## Beschreibung

Die Erfindung betrifft eine Führungseinrichtung für eine Leitung, insbesondere für eine Energieführungskette, die derart verfahrbar ist, dass ein erstes Trum derselben über ein zweites Trum derselben positionierbar ist und die beiden Trume durch einen bogenförmigen Abschnitt miteinander verbunden sind, wobei die Führungseinrichtung seitlich gegenüberliegende Führungswände zur Führung des ersten und/oder des zweiten Trums aufweist, die zumindest in einem Bereich aus seitlich gegenüberliegenden einstückig aus Kunststoff geformten Wandelementen bestehen, die jeweils zwei voneinander in Längsrichtung des Wandelements, definiert durch die Längsrichtung der Führungseinrichtung, weg weisende Stirnseiten, eine von dem seitlich gegenüberliegenden Wandelement weg weisende Außenseite, eine zu dem seitlich gegenüberliegenden Wandelement hin weisende Innenseite mit einem Führungsbereich für die Leitung, eine gegenüber der Außen- und Innenseite schmalere Oberseite und Unterseite aufweisen, mindestens zwei unmittelbar benachbarte Wandelemente an ihren aufeinander zugewandten stirnseitigen Endbereichen einstückig angeformte Befestigungsmittel aufweisen, die ohne Zwischenschaltung eines weiteren Befestigungsmittels oder unter Zwischenschaltung eines weiteren Befestigungsmittels zur Befestigung der beiden unmittelbar benachbarten Wandelemente aneinander miteinander zusammenwirken, wobei zur Verbindung der an den aufeinander zugewandten stirnseitigen Endbereichen der Wandelemente angeformten Befestigungsmittel ohne Zwischenschaltung eines weiteren Befestigungsmittels eines der Befestigungsmittel einen Vorsprung und ein anderes der Befestigungsmittel eine Ausnehmung oder eine Öffnung aufweist, wobei der Vorsprung in die Ausnehmung oder Öffnung eingreift.

Eine derartige Führungseinrichtung ist aus der DE 20 2014 103 562 bekannt. Zur Verbindung der Befestigungsmittel mit dem Zwischenglied sind an den zum gegenüberliegenden Wandelement hin weisenden Stirnseiten der Stege stufenförmige Absätze mit als Rastmittel ausgebildeten Vorsprüngen vorgesehen, die mit als Rastmittel ausgebildeten Durchgangsöffnungen des Zwischenglieds zusammenwirken, wobei das Zwischenglied zwischen den Stegen der gegenüberliegenden Wandelemente angeordnet ist.

Aus der US 2011/013978 A1 ist eine Kabelrinne bekannt, die seitlich gegenüberliegende Wände aufweist, die aus seitlich gegenüberliegenden einstückigen Wandelementen bestehen. Die Wandelemente weisen jeweils zwei voneinander in Längsrichtung des Wandelements weg weisende Stirnseiten, eine von dem seitlich gegenüberliegenden Wandelement weg weisende Außenseite, eine zu dem seitlich gegenüberliegenden Wandelement hin weisende Innenseite sowie eine gegenüber der Außen- und Innenseite schmalere Oberseite und Unterseite auf, wobei zwei unmittelbar benachbarte Wandelemente an ihren aufeinander zugewandten stirnseitigen Endbereichen Befestigungsmittel aufweisen, die unter Zwischenschaltung eines weiteren Befestigungsmittels zur Befestigung der beiden unmittelbar benachbarten Wandelemente aneinander derart miteinander zusammenwirken, dass eine Bewegung der beiden unmittelbar benachbarten Wandelemente relativ zueinander in ihrer Längsrichtung über einen vorbestimmten begrenzten Weg erfolgen kann. Dazu weisen die benachbarten Wandelemente an ihren aufeinander zugewandten stirnseitigen Endbereichen Bohrungen mit hindurchtretenden Schraubbolzen als Befestigungsmittel auf, die unter Zwischenschaltung einer Verbindungslasche als weiteres Befestigungsmittel mit eingeformten sich in Längsrichtung erstreckenden Langlöchern miteinander zusammenwirken. Die Verbindungslasche wird mithilfe von Muttern an den Schraubbolzen befestigt, die derart angezogen werden, dass eine Bewegung der beiden unmittelbar benachbarten Wandelemente relativ zueinander in ihrer Längsrichtung über einen begrenzten Weg erfolgen kann. Die Wandelemente weisen an ihrer Unterseite einen Steg auf, der auf einem an der Unterseite der Verbindungslasche ebenfalls angeordneten Steg aufliegt. Der Steg weist wie die Wandbereiche der Wandelemente Bohrungen mit hindurchtretenden Schraubbolzen auf, an denen der Steg der Verbindungslasche in der vorstehend beschriebenen Art befestigbar ist. Aufgrund der Längsverschieblichkeit unmittelbar benachbarter Wandelemente lassen sich Längenänderungen der Kabelrinne und temperaturbedingte Änderungen der einzelnen Wandelemente kompensieren.

Der vorliegenden Erfindung liegt die Aufgabe zugrunde, eine Führungseinrichtung bereitzustellen, die sowohl eine einfache Herstellung der Wandelemente und deren Montage als auch eine Kompensation von Längenänderungen der Führungseinrichtung und temperaturbedingte Änderungen der einzelnen Wandelemente ermöglicht.

Die Aufgabe wird erfindungsgemäß durch die Merkmalskombination des Anspruchs 1 gelöst. Weitere Ausbildungen der Erfindung sind Gegenstand der von Anspruch 1 abhängigen Ansprüche 2 bis 10.

Die Befestigungsmittel können so ausgebildet sein, dass sie eine Bewegung der unmittelbar benachbarten Wandelemente relativ zueinander quer zu ihrer Längsrichtung blockieren.

Die Befestigungsmittel können formschlüssig miteinander zusammenwirken, so dass eine Bewegung der beiden unmittelbar benachbarten Wandelemente relativ zueinander in ihrer Längsrichtung über den vorbestimmten begrenzten Weg möglich ist.

Die unmittelbar benachbarten Wandelemente können auch an ihren voneinander abgewandten stirnseitigen Endbereichen einstückig angeformte Befestigungsmittel aufweisen, die ohne Zwischenschaltung eines weiteren Befestigungsmittels oder unter Zwischenschaltung eines weiteren Befestigungsmittels mit Befestigungsmitteln der an diesen Stirnseiten unmittelbar benachbarten Wandelemente in der vorstehend beschriebenen Art zusammenwirken, dass eine Bewegung der Wandelemente relativ zueinander in ihrer Längsrichtung über einen vorbestimmten begrenzten Weg erfolgen kann.

Die den betreffenden Bereich der Führungseinrichtung bildenden Wandelemente können somit aus gleichen Wandelementen gebildet sein.

Die Höhe des am jeweiligen Steg angeformten Vorsprungs entspricht vorzugsweise der Tiefe der an der Unterseite des Zwischenglieds vorgesehenen Ausnehmung, und die Tiefe der um den Vorsprung verlaufenden Ausnehmung im Steg entspricht vorzugsweise der Höhe des um die Ausnehmung im Zwischenglied verlaufenden Eingriffsbereichs, wobei die Oberseiten des Vorsprungs, des Eingriffsbereichs und gegebenenfalls weiterer Bereiche des Stegs eine ebene Auflagefläche für die Leitung bilden.

Die an der Unterseite des Zwischenglieds vorgesehene Ausnehmung kann als eine sich bis zur Oberseite des Zwischenglieds erstreckende Durchgangsöffnung ausgebildet sein. Dabei kann sich der Vorsprung bis zur Oberseite des Zwischenglieds erstrecken.

Zur Festlegung des Zwischenglieds an den einander zugewandten stirnseitigen Bereichen der Stege der unmittelbar benachbarten Wandelemente können sich die in den Stegen ausgebildeten Ausnehmungen zumindest teilweise unter den Führungsbereich der Innenseiten der Wandelemente erstrecken und der Eingriffsbereich des Zwischenglieds darunter mit einem Vorsprung eingreifen.

Der Vorsprung kann als Federzunge ausgebildet sein.

Der im betreffenden stirnseitigen Endbereich des Stegs angeordnete Vorsprung kann an seiner von der Innenseite des Wandelements abgewandten Seite eine Nase aufweisen, unter die beim Befestigen des Zwischenglieds auf den benachbarten Vorsprüngen ein in der an der Unterseite des Zwischenglieds vorgesehenen Ausnehmung bzw. im Zwischenglied vorgesehenen Durchgangsöffnung angeordneter Rastvorsprung greift. Das Zwischenglied kann somit in geeignet schräger Lage über den Vorsprüngen der unmittelbar benachbarten Wandelemente mit seinem als Federzunge ausgebildeten Vorsprung unter die Innenseiten der Wandelemente in die in den Stegen ausgebildeten Ausnehmungen eingeführt und dann in die Senkrechte zum Wandelement verschwenkt werden, wobei der Rastvorsprung unter die an den Vorsprüngen angeordneten Nasen der in der Ausnehmung bzw. Durchgangsöffnung des Zwischenglieds vorgesehene Rastvorsprung derart rastend eingreift, dass die beiden Vorsprünge ein begrenztes Bewegungsspiel in Längsrichtung der Wandelemente innerhalb der Ausnehmung besitzen.

Der als Federzunge ausgebildete Vorsprung kann sich bei der oben beschriebenen Befestigung elastisch an die Unterseite der Führungsbereiche der Innenseiten der Wandelemente anlegen.

Das Zwischenglied ist bevorzugt als endseitiger Bereich einer gegenüberliegende Wandelemente verbindenden einstückigen Traverse ausgebildet. Beide endseitigen Bereiche der Traverse können dann jeweils als Zwischenglied zur Verbindung der Befestigungsmittel unmittelbar benachbarter Wandelemente in den gegenüberliegenden Führungswänden der Führungseinrichtung dienen.

An den betreffenden aneinander angrenzenden stirnseitigen Endbereichen der unmittelbar benachbarten Wandelemente können zusätzliche Befestigungsmittel angeformt sein, die formschlüssig derart zusammenwirken, dass eine Auseinanderbewegung der unmittelbar benachbarten Wandelemente in deren Längsrichtung erfolgen kann. Die zusätzlichen Befestigungselemente können im oberen Bereich der Wandelemente angeordnet sein und die oben beschriebenen, im unteren Bereich der Wandelemente angeordneten Befestigungsmittel ergänzen. Sie tragen zur Stabilisierung der genau zueinander fluchtenden Innenseiten der unmittelbar benachbarten Wandelemente in deren gesamter Höhe bei.

Die zusätzlichen Befestigungsmittel können als Nut-/Federmittel ausgebildet sein und die unmittelbar benachbarten Wandelemente in ihren aufeinander zugewandten stirnseitigen Endbereichen bei deren längs gerichteter Bewegung führen.

Die an den aufeinander zugewandten stirnseitigen Endbereichen der unmittelbar benachbarten Wandelemente angeformten Befestigungsmittel zur längsverschieblichen Festlegung der unmittelbar benachbarten Wandelemente um den vorbestimmten begrenzten Weg können zweite Befestigungsmittel bilden, während an den voneinander abgewandten stirnseitigen Endbereichen der unmittelbar benachbarten Wandelemente einstückig angeformte erste Befestigungsmittel vorgesehen sein können, die zur Anlage und spielfreien Festlegung an ersten Befestigungsmitteln eines an dieser Stirnseite unmittelbar benachbarten Wandelements dienen.

Die den betreffenden Bereich der Führungseinrichtung bildenden Wandelemente mit ersten Befestigungsmitteln in einem ihrer stirnseitigen Endbereiche und mit zweiten Befestigungsmitteln in ihrem anderen stirnseitigen Endbereich können aus lediglich zwei unterschiedlichen Arten von jeweils gleichen Wandelementen gebildet sein, wobei sich in den gegenüberliegenden Führungswänden Wandelemente ungleicher Art gegenüberliegen.

Die ersten Befestigungsmittel im anderen stirnseitigen Endbereich der Wandelemente, die zur Anlage und spielfreien Festlegung an dem an dieser Stirnseite unmittelbar benachbarten Wandelement dienen, können im Wesentlichen so ausgebildet sein wie die oben beschriebenen zweiten Befestigungsmittel. Hierbei entspricht jedoch die Breite der an der Unterseite eines Zwischenglieds vorgesehenen Ausnehmung bzw. der sich durch das Zwischenglied erstreckenden Durchgangsöffnung weitgehend exakt der von den beiden an den gegenüberliegenden stirnseitigen Endbereichen vorgesehenen Vorsprüngen eingenommenen Breite. Bis auf diesen Unterschied können die dort angeordneten zweiten Befestigungsmittel den im Bereich der anderen Stirnseite angeordneten ersten Befestigungsmitteln gleichen.

Die an den anderen stirnseitigen Endbereichen der Wandelemente vorgesehenen ersten Befestigungsmittel, die die oben beschriebenen Mittel einschließen können, können über dem unteren Bereich der Wandelemente, gegebenenfalls oberhalb eines vorgesehenen Stegs, Mittel zur spielfreien Festlegung eines an dieser Stirnseite anliegenden Wandelements aufweisen. Die Mittel dienen vorzugsweise gegen Trennung der betreffenden unmittelbar benachbarten Wandelemente in deren Längsrichtung und quer dazu sowie gegen Verschwenkung der Wandelemente zueinander in beliebiger Richtung.

Die Mittel können an der Außenseite der Wandelemente angeordnet sein.

Erfindungsgemäß sind die Mittel als ein an der Außenseite vorstehender Vorsprung und im Bereich des betreffenden stirnseitigen Endes des unmittelbar benachbarten Wandelements als ein den Vorsprung aufnehmender Aufnahmebereich ausgebildet. Der Aufnahmebereich kann eine Öffnung aufweisen, in die der Vorsprung des unmittelbar benachbarten Wandelements eingreift. Der Vorsprung kann rastend in den Aufnahmebereich eingeführt und darin formschlüssig angeordnet sein.

Die Wandelemente können über die gesamte Höhe ihrer Innen-und Außenseite hinweg eine im Wesentlichen gleiche Wandstärke aufweisen. Ihre Stirnseiten können als ebene, d. h. keine Vorsprünge aufweisenden Flächen ausgebildet sein, so dass die die ersten Befestigungsmittel aufweisenden stirnseitigen Bereiche mit ihren Stirnseiten vollflächig aneinander liegen und/oder und die die zweiten Befestigungsmittel aufweisenden stirnseitigen Bereiche der Wandelemente mit ihren Stirnseiten ebenfalls vollflächig aneinander liegen können.

Dazu sind die ersten und/oder die zweiten Befestigungsmittel, die die oben beschriebenen Mittel einschließen können, als sich seitlich außerhalb der Stirnseiten und außerhalb der zur Führung der Leitung dienenden Führungsbereiche der Innenseiten der Wandelemente erstreckend angeordnet.

Ein Ausführungsbeispiel der vorliegenden Erfindung wird im Folgenden anhand der Zeichnung näher erläutert.

In der Zeichnung zeigen:
- Figur 1: eine perspektivische Darstellung eines Abschnitts der Führungseinrichtung,
- Figur 2: eine seitliche Darstellung in Richtung des Pfeils II in Figur 1,
- Figur 3: eine vergrößerte Darstellung des Ausschnitts III in Figur 2,
- Figur 4: eine vergrößerte Ansicht des Ausschnitts IV in Figur 2,
- Figur 5: eine seitliche Darstellung gemäß Figur 2,
- Figur 6: eine Querschnittsdarstellung längst des Schnittes J-J in Figur 5,
- Figur 7: eine Querschnittsdarstellung längs des Schnittes K-K in Figur 5,
- Figur 8: eine vergrößerte Ansicht des Ausschnitts VIII in Figur 6,
- Figur 9: eine vergrößerte Ansicht des Ausschnitts IX in Figur 7,
- Figur 10: eine Draufsicht von oben längs des Pfeils X auf den in Figur 1 dargestellten Abschnitt der Führungseinrichtung,
- Figur 11: eine vergrößerte Ansicht des Ausschnitts XI in Figur 10,
- Figur 12: eine vergrößerte Ansicht des Ausschnitts XII in Figur 10,
- Figur 13: eine perspektivische Darstellung des in Figur 11 gezeigten Ausschnitts,
- Figur 14: eine seitliche Ansicht des in Figur 1 dargestellten Abschnitts der Führungseinrichtung mit zum Teil getrennten Wandelementen,
- Figur 15: eine vergrößerte Ansicht des Ausschnitts XV in Figur 14 und
- Figur 16: eine vergrößerte Ansicht des Ausschnitts XVI in Figur 14.

Das in der Zeichnung als Abschnitt 1 dargestellte Ausführungsbeispiel einer Führungseinrichtung ist zur Aufnahme und Führung einer in der Zeichnung nicht dargestellten Leitung, insbesondere einer Energieführungskette, ausgelegt, die derart verfahrbar ist, dass ein erstes Trum derselben über ein zweites Trum derselben positionierbar ist und die beiden Trume durch einen bogenförmigen Abschnitt miteinander verbunden sind. Die Führungseinrichtung weist zumindest in dem gezeigten Abschnitt 1 seitlich gegenüberliegende Führungswände 2 und 3 zur Führung des ersten und/oder des zweiten Trums auf, die aus seitlich gegenüberliegenden, einstückig aus Kunststoff geformten Wandelementen 4 und 5 bestehen. Die Wandelemente 4 und 5 weisen jeweils zwei voneinander in Längsrichtung des betreffenden Wandelements 4, 5 weg weisende Stirnseiten 6 und 7, eine von dem seitlich gegenüberliegenden Wandelement 4 bzw. 5 weg weisende Außenseite 8, eine zu dem betreffenden gegenüberliegenden Wandelement 4 bzw. 5 hin weisende Innenseite 9, eine gegenüber der Außen- und Innenseite 8, 9 schmalere Oberseite 10 und Unterseite 11 auf. Weiterhin weisen die Wandelemente 4 und 5 im Bereich ihrer einen Stirnseite 6 einstückig angeformte erste Befestigungsmittel 12 zur Anlage und spielfreien Festlegung an einem unmittelbar benachbarten Wandelement auf.

Im Bereich ihrer anderen Stirnseite 7 weisen die Wandelemente 4 und 5 einstückig angeformte zweite Befestigungsmittel 13 zur Befestigung an einem unmittelbar benachbarten Wandelement auf. Wie im Folgenden anhand der Zeichnung weiter erläutert wird, lassen die zweiten Befestigungsmittel 13 eine Bewegung der beiden unmittelbar benachbarten Wandelemente 4 und 5 relativ zueinander in ihrer Längsrichtung über einen vorbestimmten begrenzten Weg zu.

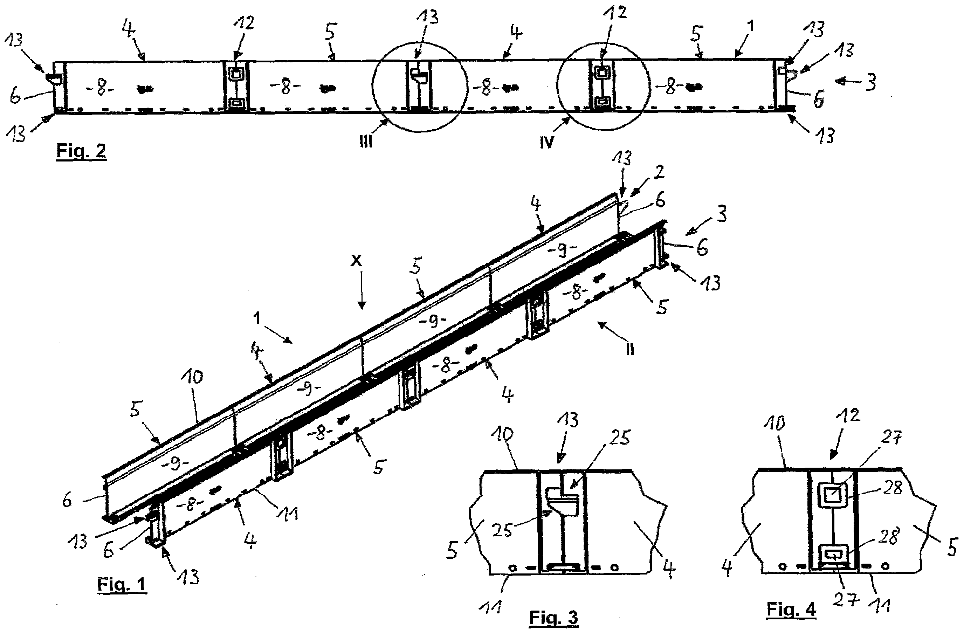

Wie insbesondere aus den Figuren 1, 2 und 14 hervorgeht, setzen sich die den betreffenden Bereich der Führungseinrichtung bildenden Wandelemente 4 und 5 aus zwei unterschiedlichen Arten von jeweils gleichen Wandelementen, einer ersten Art Wandelemente 4 und einer zweiten Art Wandelemente 5, zusammen, wobei sich in den gegenüberliegenden Führungswänden 2 und 3 jeweils Wandelemente ungleicher Art gegenüberliegen. Die Wandelemente 4 erster Art weisen im Bereich ihrer Stirnseite 7 erste Befestigungsmittel 12 und im Bereich ihrer Stirnseite 6 zweite Befestigungsmittel 13 auf. Die Wandelemente 5 zweiter Art weisen im Bereich ihrer Stirnseite 6 zweite Befestigungsmittel 13, die mit den zweiten Befestigungsmitteln 13 des Wandelements 4 zusammenwirken, und im Bereich der Stirnseite 7 erste Befestigungsmittel 12 auf, die mit den ersten Befestigungsmitteln 12 des Wandelements 4 zusammenwirken.

Die Wandelemente 4 und 5 können zumindest im Bereich ihrer stirnseitigen Enden, in denen die zweiten Befestigungsmittel 13 vorgesehen sind, im Bereich ihrer Unterseiten einen Steg 14 aufweisen, an dem zweite Befestigungsmittel angeordnet sind.

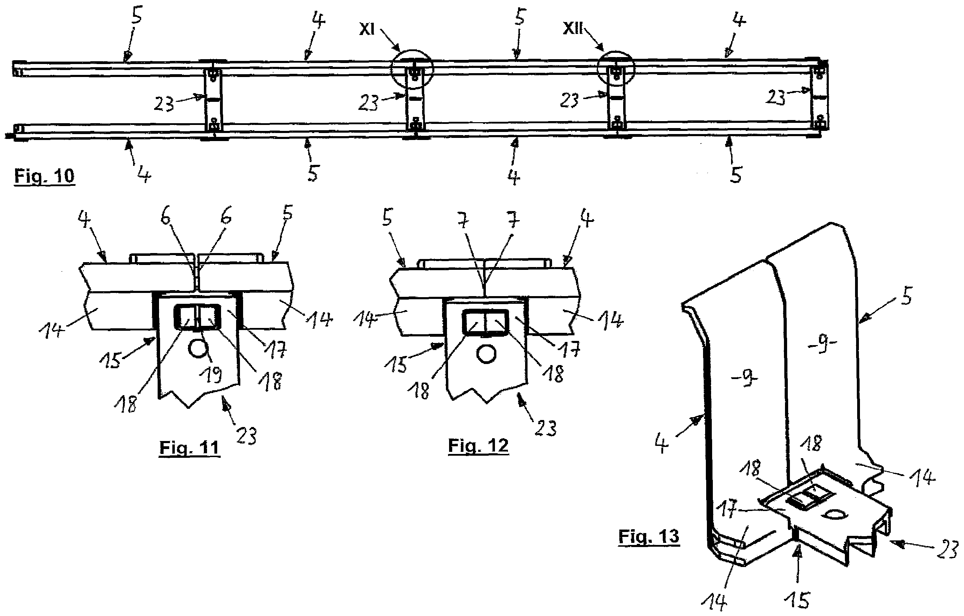

Wie insbesondere aus den Figuren 10, 11 und 13 hervorgeht, wirken die Befestigungsmittel 13 unmittelbar benachbarter Wandelemente 4 und 5 über ein Zwischenglied 15 zur Befestigung der Wandelemente 4 und 5 derart zusammen, dass eine Bewegung der beiden Wandelemente 4 und 5 relativ zueinander in ihrer Längsrichtung über einen vorbestimmten begrenzten Weg möglich ist.

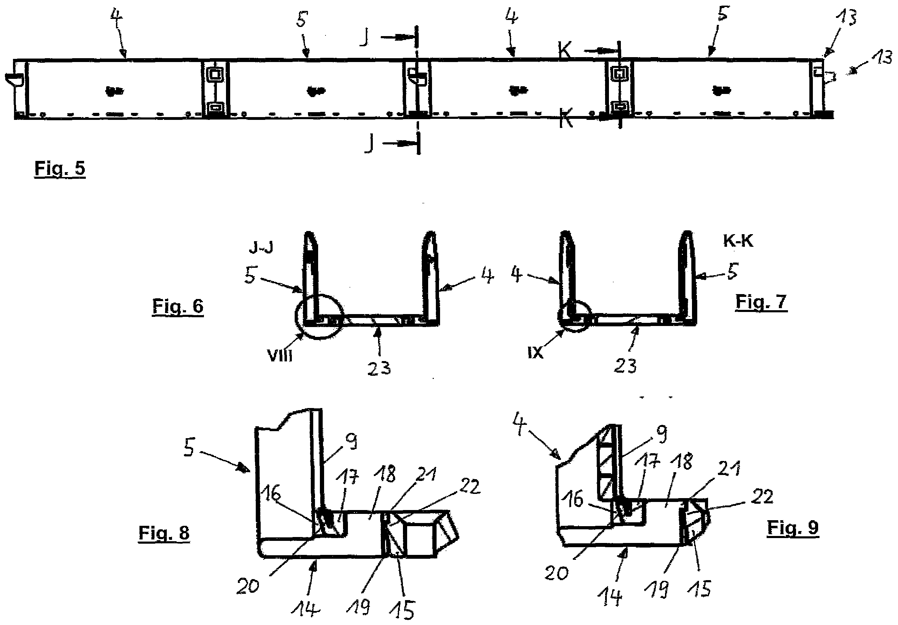

Wie in den Figuren 5, 6, 8 und 11 gezeigt ist, weisen die zum gegenüberliegenden Wandelement hin gerichteten Stege 14 Ausnehmungen 16 auf, in die ein Eingriffsbereich 17 des Zwischenglieds 15 eingreift. Die Ausnehmung 16 verläuft um einen am zum unmittelbar benachbarten Wandelement hin gerichteten stirnseitigen Ende des Stegs angeordneten Vorsprung 18. Der Vorsprung ist an den Grund einer sich im Bereich des stirnseitigen Endes des Stegs 14 ausgebildeten Vertiefung nach oben vorstehend angeformt, wobei die sich um den Vorsprung 18 herum erstreckende Vertiefung die Ausnehmung 16 bildet.

Die Vorsprünge 18 im Bereich der aufeinander zu weisenden stirnseitigen Enden unmittelbar benachbarter Wandelemente 4 und 5 greifen in eine Durchgangsöffnung 19 des Zwischenglieds 15, die sich von der Unterseite des Zwischenglieds 15 zu dessen Oberseite erstreckt. Die Breite der Durchgangsöffnung 19 in Längsrichtung der Wandelemente 4 und 5 ist dabei größer bemessen als die von den beiden Vorsprüngen 18 eingenommene Breite bei stirnseitigem Aneinanderliegen der unmittelbar benachbarten Wandelemente 4 und 5. Die Vorsprünge 18 liegen bei Aneinanderliegen der aufeinander zu weisenden Stirnseiten 6 und 7 der unmittelbar benachbarten Wandelemente 4 und 5 ebenfalls aneinander an.

Die Höhe des am jeweiligen Steg 14 angeformten Vorsprungs 18 entspricht der Länge der im Zwischenglied 15 vorgesehenen Durchgangsöffnung 19, während die Tiefe der um den Vorsprung 18 verlaufenden Ausnehmung 16 im Steg 14 der Höhe des um die Durchgangsöffnung 19 im Zwischenglied 15 verlaufenden Eingriffsbereichs 17 entspricht. Die Oberseiten des Vorsprungs 18, des Eingriffsbereichs 17 und der weiteren Bereiche des sich über die Länge des Wandelements 4, 5 erstreckenden Stegs 14 bilden eine im Wesentlichen durchgehende ebene Auflagefläche für die Leitung.

Zur Festlegung des Zwischenglieds 15 an den einander zugewandten stirnseitigen Bereichen der Stege 14 unmittelbar benachbarter Wandelemente 4 und 5 erstrecken sich die in den Stegen 14 ausgebildeten Ausnehmungen 16 teilweise in einen Bereich unter den Innenseiten 9 der Wandelemente 4 und 5 hinein, wie aus Figur 8 hervorgeht. Der Eingriffsbereich 17 des Zwischenglieds 15 greift in diesen Bereich mit einem als Federzunge 20 ausgebildeten Vorsprung ein.

Zwischen der von der Innenseite 9 des Wandelements 4, 5 abgewandten Seite des Vorsprungs 18 und der Durchgangsöffnung 19 des Zwischenglieds 15 ist eine Rastverbindung vorgesehen. Dazu weist, wie in Figur 8 gezeigt ist, der Vorsprung 18 an seiner von der Innenseite 9 des Wandelements 4, 5 abgewandten Seite eine Nase 21 auf, unter die beim Befestigen des Zwischenglieds 15 auf den benachbarten Vorsprüngen 18 ein in der Durchgangsöffnung 19 vorgesehener Rastvorsprung 22 einrastet. Das Zwischenglied 15 kann somit in geeignet schräger Lage über den Vorsprüngen 18 unmittelbar benachbarter Wandelemente 4 und 5 mit seinem als Federzunge 20 ausgebildeten Vorsprung unter die Innenseiten 9 der Wandelemente 4 und 5 in die in den Stegen 14 ausgebildeten Ausnehmungen 16 eingeführt und dann in die Senkrechte zum Wandelement verschwenkt werden, wobei die in der Durchgangsöffnung 19 angeordneten Rastvorsprünge 22 unter die an den Vorsprüngen 18 angeordneten Nasen 21 einrasten.

Wie insbesondere aus den Figuren 10-13 hervorgeht, ist das Zwischenglied 15 als endseitiger Bereich einer gegenüberliegende Wandelemente 4 und 5 verbindenden einstückigen Traverse 23 ausgebildet. Beide endseitigen Bereiche der Traverse 23 dienen somit als Zwischenglieder 15 zur Verbindung der zweiten Befestigungsmittel 13 unmittelbar benachbarter Wandelemente 4 und 5 in den gegenüberliegenden Führungswänden 2 und 3 der Führungseinrichtung.

Die ersten Befestigungsmittel 12 an den anderen stirnseitigen Endbereichen der Wandelemente 4, 5, die zur Anlage und spielfreien Festlegung an dem an diesen Stirnseiten unmittelbar aneinander angrenzenden Wandelementen 4 und 5 dienen, sind im Wesentlichen so ausgebildet wie die oben beschriebenen zweiten Befestigungsmittel 13. Wie insbesondere aus den Figuren 5, 7, 9 und 12 hervorgeht, entspricht hierbei jedoch die Breite der im Zwischenglied 15 vorgesehenen Durchgangsöffnung 19 in Längsrichtung der Wandelemente 4 und 5 weitgehend exakt der von den beiden an den gegenüberliegenden stirnseitigen Endbereichen vorgesehenen Vorsprüngen 18 eingenommenen Breite. Bis auf diesen Unterschied gleichen die dort angeordneten ersten Befestigungsmittel 12 den im Bereich der anderen Stirnseite angeordneten zweiten Befestigungsmitteln 13.

Wie insbesondere in den Figuren 1, 3, 14 und 16 gezeigt ist, schließen die zweiten Befestigungsmittel 13 weiterhin in den betreffenden aneinander angrenzenden stirnseitigen Endbereichen unmittelbar benachbarter Wandelemente 4 und 5 zusammenwirkende Nut-/Federmittel 24 ein, die eine Auseinanderbewegung der unmittelbar benachbarten Wandelemente 4 und 5 in deren Längsrichtung erlauben. Die Nut-/Federmittel 25 sind im oberen Bereich der Wandelemente 4 und 5 angeordnet und ergänzen die oben beschriebenen im Steg 14 der Wandelemente 4 und 5 angeordneten Befestigungsmittel.

Die Nut-/Federmittel 25 sind an der Außenseite des Wandelements 4 als eine sich in Längsrichtung des Wandelements und an dessen Stirnseite 6 vorstehendes plattenförmiges Element und eine im Bereich der Stirnseite 6 des Wandelements 5 an dessen Außenseite angeordnete und sich in Längsrichtung des Wandelements 5 erstreckenden Nut ausgebildet, in die das plattenförmige Teil des Wandelements 4 beim Aneinandersetzen der beiden Wandelemente 4 und 5 eingreift. Die Nut ist in einem an der Außenseite des Wandelements 5 angeformten und diese nach unten in Richtung der Unterseite 11 des Wandelements 5 überkragenden Teil angeordnet. Das plattenförmige Teil am Wandelement 4 weist in seinem oberen, zur Oberseite 10 des Wandelements 4 gerichteten Bereich einen Abschnitt auf, der als Feder in die Nut des am Wandelement 5 angeordneten überkragenden Teils eingreift. Unterhalb dieses Abschnitts weist das plattenförmige Teil einen nach außen vorstehenden Steg auf, auf dem das überkragende Teil längsverschieblich aufliegt.

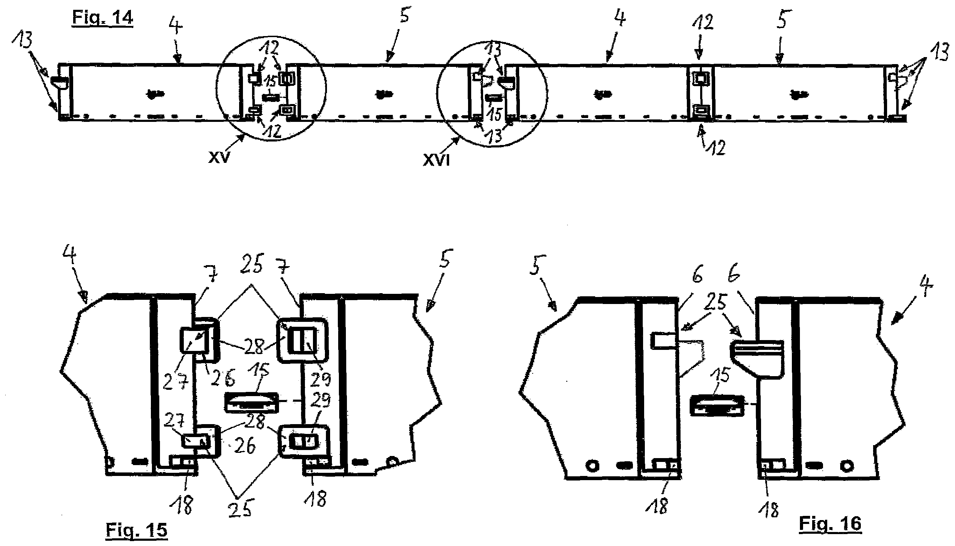

Die an den anderen stirnseitigen Endbereichen der Wandelemente 4 und 5 vorgesehenen ersten Befestigungsmittel 12, die die oben beschriebenen, in den Stegen 14 angeordneten Mittel einschließen, weisen über den Stegen weitere Mittel zur spielfreien Festlegung eines an der betreffenden Stirnseite anliegenden Wandelementes 4, 5 auf. Die Mittel dienen, wie die im Bereich der Stege 14 in diesem Endbereich vorgesehene Mittel, gegen Trennung der betreffenden unmittelbar benachbarten Wandelemente 4 und 5 in deren Längsrichtung und quer dazu sowie gegen Verschwenkung der Wandelemente zueinander in beliebiger Richtung. Die Mittel sind, wie aus den Figuren 14 und 16 hervorgeht, an den Außenseiten 8 der Wandelemente 4 und 5 angeordnet. Sie sind als ein an der Stirnseite 7 vorstehender Vorsprung 26 mit einem Rastbereich 27 und im Bereich des betreffenden stirnseitigen Endes des unmittelbar benachbarten Wandelements als ein den Rastbereich 27 aufnehmender Aufnahmebereich 28 ausgebildet. Der Aufnahmebereich 28 weist eine fensterartige Öffnung 29 auf, in die der Rastbereich 27 des Vorsprungs 26 des unmittelbar benachbarten Wandelements 4, 5 greift.

Die Wandelemente 4 und 5 weisen über die gesamte Höhe ihrer Außen- und Innenseite hinweg eine im Wesentlichen gleiche Wandstärke auf. Ihre Stirnseiten 6 und 7 sind als ebene Flächen ausgebildet, so dass die die ersten Befestigungsmittel 12 aufweisenden stirnseitigen Bereiche mit ihren Stirnseiten 7 vollflächig aneinander liegen und die die zweiten Befestigungsmittel 13 aufweisenden stirnseitigen Bereiche der Wandelemente 4 und 5 mit ihren anderen Stirnseiten 6 aufgrund des Spiels der zweiten Befestigungsmittel 13 ebenfalls vollflächig aneinander liegen können.

Die ersten Befestigungsmittel 12 sowie die zweiten Befestigungsmittel 13, die die oben beschriebenen Mittel einschließen, sind als sich seitlich außerhalb der Stirnseiten 6 und 7 und der zur Führung der Leitung dienenden Innenseiten bzw. der Außenseiten der Wandelemente 4 und 5 erstreckend angeordnet.

### Bezugszeichenliste

- 1: Abschnitt einer Führungseinrichtung
- 2: Führungswand
- 3: Führungswand
- 4: Wandelement
- 5: Wandelement
- 6: Stirnseite
- 7: Stirnseite
- 8: Außenseite
- 9: Innenseite
- 10: Oberseite
- 11: Unterseite
- 12: erste Befestigungsmittel
- 13: zweite Befestigungsmittel
- 14: Steg
- 15: Zwischenglied
- 16: Ausnehmung
- 17: Eingriffsbereich
- 18: Vorsprung
- 19: Durchgangsöffnung
- 20: Federzunge
- 21: Nase
- 22: Rastvorsprung
- 23: Traverse
- 24: Vorsprung
- 25: Nut-/Federmittel
- 26: Vorsprung
- 27: Rastbereich
- 28: Aufnahmebereich
- 29: Öffnung

## Patentansprüche

1. Führungseinrichtung für eine Leitung, insbesondere für eine Energieführungskette, die derart verfahrbar ist, dass ein erstes Trum derselben über ein zweites Trum derselben positionierbar ist und die beiden Trume durch einen bogenförmigen Abschnitt miteinander verbunden sind, wobei die Führungseinrichtung seitlich gegenüberliegende Führungswände (2, 3) zur Führung des ersten und/oder des zweiten Trums aufweist, die zumindest in einem Bereich aus seitlich gegenüberliegenden, einstückig aus Kunststoff geformten Wandelementen (4, 5) bestehen, die jeweils zwei voneinander in Längsrichtung des Wandelements (4, 5), definiert durch die Längsrichtung der Führungsrichtung, weg weisende Stirnseiten (6, 7), eine von dem seitlich gegenüberliegenden Wandelement (4, 5) weg weisende Außenseite (8), eine zu dem seitlich gegenüberliegenden Wandelement (4, 5) hin weisende Innenseite (9) mit einem Führungsbereich für die Leitung, eine gegenüber der Außen- und Innenseite (8, 9) schmalere Oberseite (10) und Unterseite (11) aufweisen, mindestens zwei unmittelbar benachbarte Wandelemente (4, 5) an ihren aufeinander zugewandten stirnseitigen Endbereichen einstückig angeformte Befestigungsmittel aufweisen, die ohne Zwischenschaltung eines weiteren Befestigungsmittels oder unter Zwischenschaltung eines weiteren Befestigungsmittels zur Befestigung der beiden unmittelbar benachbarten Wandelemente (4, 5) aneinander miteinander zusammenwirken,
wobei zur Verbindung der an den aufeinander zugewandten stirnseitigen Endbereichen der Wandelemente (4, 5) angeformten Befestigungsmittel ohne Zwischenschaltung eines weiteren Befestigungsmittels eines der Befestigungsmittel einen Vorsprung (18) und ein anderes der Befestigungsmittel eine Ausnehmung oder eine Öffnung aufweist, wobei der Vorsprung (18) in die Ausnehmung oder Öffnung eingreift und die Breite der Ausnehmung oder Öffnung in Längsrichtung der Wandelemente (4, 5) größer ist als die Breite des Vorsprungs (18), so dass eine Bewegung der beiden unmittelbar benachbarten Wandelemente (4, 5) relativ zueinander in ihrer Längsrichtung über einen vorbestimmten begrenzten Weg erfolgen kann,
oder wobei die an ihren aufeinander zugewandten stirnseitigen Endbereichen einstückig angeformten Befestigungsmittel unter Zwischenschaltung eines weiteren Befestigungsmittels über ein Zwischenglied (15) als weiteres Befestigungsmittel formschlüssig miteinander verbunden sind, die unmittelbar benachbarten Wandelemente (4, 5) zumindest an ihren aufeinander zugewandten stirnseitigen Endbereichen im Bereich ihrer Unterseiten jeweils einen Steg (14) aufweisen, an dessen zum unmittelbar benachbarten Wandelement (4, 5) hin gerichteten stirnseitigen Ende ein Vorsprung (18) angeordnet ist, und eine Ausnehmung (16) um den Vorsprung (18) an dessen zur Innenseite (9) und von der Stirnseite (6) des Wandelements (4, 5) weg weisenden Seite verläuft, in die ein Eingriffsbereich (17) des Zwischenglieds (15) eingreift, und die Vorsprünge (18) der unmittelbar benachbarten Wandelemente (4, 5) in eine an der Unterseite des Zwischenglieds (15) vorgesehene Ausnehmung oder eine sich von der Unterseite des Zwischenglieds (15) bis zu dessen Oberseite erstreckende Durchgangsöffnung (19) eingreifen, wobei die Breite der Ausnehmung oder Durchgangsöffnung (19) in Längsrichtung der Wandelemente (4, 5) grö-βer bemessen ist als die von den beiden Vorsprüngen (18) eingenommene Breite bei stirnseitigem Aneinanderliegen der unmittelbar benachbarten Wandelemente (4, 5), so dass eine Bewegung der beiden Wandelemente (4, 5) relativ zueinander in ihrer Längsrichtung über einen vorbestimmten begrenzten Weg erfolgen kann.

2. Führungseinrichtung nach Anspruch 1, **dadurch gekennzeichnet, dass** die Höhe des am jeweiligen Steg (14) angeformten Vorsprungs (18) der Tiefe der an der Unterseite des Zwischenglieds (15) vorgesehenen Ausnehmung oder der Länge des sich von der Unterseite des Zwischenglieds (15) zu dessen Oberseite erstreckenden Durchgangsöffnung (19) entspricht und die Tiefe der um den Vorsprung (18) verlaufenden Ausnehmung (16) im Steg (14) der Höhe des um die Ausnehmung (16) im Zwischenglied (15) verlaufenden Eingriffsbereichs (17) entspricht, wobei die Oberseiten des Vorsprungs (18), des Eingriffsbereichs (17) und gegebenenfalls weiterer Bereiche des Stegs (14) eine im Wesentlichen durchgehende ebene Auflagefläche für die Leitung bilden.

3. Führungseinrichtung nach Anspruch 1 oder 2, **dadurch gekennzeichnet, dass** die in den Stegen (14) ausgebildeten Ausnehmungen (16) sich zumindest teilweise unter dem Führungsbereich der Innenseiten (9) der Wandelemente (4, 5) erstrecken und der Eingriffsbereich (17) des Zwischenglieds (15) darunter mit einem Vorsprung eingreift.

4. Führungseinrichtung nach Anspruch 3, **dadurch gekennzeichnet, dass** der Vorsprung als Federzunge (20) ausgebildet ist.

5. Führungseinrichtung nach einem der Ansprüche 1 bis 4, **dadurch gekennzeichnet, dass** der im stirnseitigen Endbereich des Stegs (14) angeordnete Vorsprung (18) an seiner von der Innenseite (9) des Wandelements (4, 5) abgewandten Seite eine Nase (21) aufweist, unter die beim Befestigen des Zwischenglieds (15) auf den benachbarten Vorsprüngen (18) ein in der an der Unterseite des Zwischenglieds (15) vorgesehenen Ausnehmung oder im Zwischenglied (15) vorgesehenen Durchgangsöffnung (19) angeordnete Rastvorsprung (22) greift.

6. Führungseinrichtung nach einem der Ansprüche 1 bis 5, **dadurch gekennzeichnet, dass** das Zwischenglied (15) als endseitiger Bereich einer gegenüberliegende Wandelemente (4, 5) verbindenden, einstückigen Traverse (23) ausgebildet ist.

7. Führungseinrichtung nach einem der Ansprüche 1 bis 6, **dadurch gekennzeichnet, dass** an den betreffenden aneinander angrenzenden stirnseitigen Endbereichen der unmittelbar benachbarten Wandelemente (4, 5) zusätzliche Befestigungsmittel angeformt sind, die formschlüssig derart zusammenwirken, dass eine Auseinanderbewegung der unmittelbar benachbarten Wandelemente (4, 5) in deren Längsrichtung erfolgen kann.

8. Führungseinrichtung nach Anspruch 7, **dadurch gekennzeichnet, dass** die zusätzlichen Befestigungsmittel Nut-/Federmittel (25) einschließen.

9. Führungseinrichtung nach einem der Ansprüche 1 bis 8, **dadurch gekennzeichnet, dass** die Befestigungsmittel zur längsverschieblichen Festlegung der unmittelbar benachbarten Wandelemente (4, 5) über einen vorbestimmten begrenzten Weg zweite Befestigungsmittel (13) bilden und an den voneinander abgewandten stirnseitigen Endbereichen der Wandelemente (4, 5) einstückig angeformte erste Befestigungsmittel (12) vorgesehen sind, die zur Anlage und spielfreien Festlegung an ersten Befestigungsmitteln (12) eines an dieser Stirnseite unmittelbar benachbarten Wandelements (4, 5) dienen.

10. Führungseinrichtung nach Anspruch 9, **dadurch gekennzeichnet, dass** die ersten Befestigungsmittel (12) als sich seitlich außerhalb der Stirnseiten (7) und der zur Führung der Leitung dienenden Führungsbereiche der Innenseiten (9) der Wandelemente (4, 5) erstreckend angeordnet sind.

## Claims

1. A guide device for a line, in particular for an energy guide chain, which is displaceable in such a way that a first run thereof can be positioned over a second run thereof and the two runs are connected together by an arcuate portion, wherein the guide device has laterally mutually opposite guide walls (2, 3) for guiding the first and/or the second run, that at least in a region comprise laterally mutually opposite wall elements (4, 5) which are formed in one piece from plastic and which respectively have two ends (6, 7) facing away from each other in the longitudinal direction of the wall element (4, 5), defined by the longitudinal direction of the guide device, an outside (8) which faces away from the laterally mutually opposite wall element (4, 5), an inside (9) which faces towards the laterally mutually opposite wall element (4, 5) and has a guide region for the line, and a top side (10) and underside (11) narrower with respect to the outside and the inside (8, 9), at least two directly adjacent wall elements (4, 5) which at their mutually facing front end regions have integrally formed fixing means which without the interposition of a further fixing means or with the interposition of a further fixing means for fixing the two directly adjacent wall elements (4, 5) to each other cooperate with each other,
wherein for connecting the fixing means integrally formed on the mutually facing front end regions of the wall elements (4, 5) without the interposition of a further fixing means, one of the fixing means has a projection (18) and another of the fixing means has a recess or opening, wherein said projection engages (18) into said recess or opening and the width of the recess or opening in the longitudinal direction of the wall elements (4, 5) is greater than width of the projection (18) so that a movement of the two directly adjacent wall elements (4, 5) relative to each other in their longitudinal direction can take place over a predetermined limited distance, or
wherein the fixing means integrally formed on their mutually facing front end regions are connected to each other in a positively locking relationship with the interposition of a further fixing means via an intermediate member (15) as a further fixing means, the directly adjacent wall elements (4, 5) each have a bar (14) at their mutually facing front end regions in the region of their undersides, at the front end of said bar facing the directly adjacent wall element (4, 5) a projection (18) is arranged and a recess (18) extends around the projection (18) at its side facing towards the inside (9) and away from the end (6) of the wall element (4, 5), into which an engagement region (17) of the intermediate member (15) engages, and the projections (18) of the directly adjacent wall elements (4, 5) engage into a recess provided at the underside of the intermediate member (15) or into a through opening (19) extending from the underside of the intermediate member (15) up to its top, wherein the width of the recess or through opening (19) in the longitudinal direction of the wall elements (4, 5) is larger dimensioned than the width occupied by the two projections (18) when the front ends of the directly adjacent wall elements (4, 5) bear against each other, so that a movement of the two wall elements (4, 5) relative to each other in their longitudinal direction can take place over a predetermined limited distance.

2. A guide device according to claim 1, **characterised in that** the height of the projection (18) formed on the respective bar (14) corresponds to the depth of the recess at the underside of the intermediate member (15) or the length of the through opening (19) extending from the underside of the intermediate member (15) to the top side thereof and the depth of the recess (16) extending around the projection (18) in the bar (14) corresponds to the height of the engagement region (17) extending around the recess (16) in the intermediate member (15), the top sides of the projection (18), the engagement region (17) and optionally further regions of the bar (14) forming a substantially continuous flat contact surface for the line.

3. A guide device according to claim 1 or 2, **characterised in that** the recesses (16) in the bars (14) extend at least partially under the guide region of the insides (9) of the wall elements (4, 5) and the engagement region (17) of the intermediate member (15) engages thereunder with a projection.

4. A guide device according to claim 3, **characterised in that** the projection is in the form of a spring tongue (20).

5. A guide device according to one of claims 1 to 4, **characterised in that** the projection (18) arranged in the front end region of the bar (14) has at its side remote from the inside (9) of the wall elements (4, 5) a nose (21), under which when the intermediate member (15) is fixed on the adjacent projections (18) a latching projection (22) arranged in the recess provided at the underside of the intermediate member (15) or the through opening (19) provided in the intermediate member (15) engages.

6. A guide device according to one of claims 1 to 5, **characterised in that** the intermediate member (15) is in the form of an end region of an integral transverse member (23) connecting mutually opposite wall elements (4, 5).

7. A guide device according to one of claims 1 to 6, **characterised in that** additional fixing means are formed at the relevant mutually adjoining front end regions of the directly adjacent wall elements (4, 5), said fixing means cooperating in positively locking relationship in such a way that a movement away from each other of the directly adjacent wall elements (4, 5) in the longitudinal direction thereof can take place.

8. A guide device according to claim 7, **characterized in that** the additional fixing means comprise groove-and-tongue means (25).

9. A guide device according to one of claims 1 to 8, **characterised in that** the fixing means for longitudinally displaceably securing the directly adjacent wall elements (4, 5) over a predetermined limited distance form second fixing means (13) and provided at the mutually remote front end regions of the wall elements (4, 5) are integrally formed first fixing means (12) which serve for bearing against and play-free securing at first fixing means (12) of a wall element (4, 5) directly adjacent said front end.

10. A guide device according to claim 9, **characterised in that** the first fixing means (12) are arranged to extend laterally outside the ends (7) and the guide regions, serving to guide the line, of the insides (9) of the wall elements (4, 5).

## Revendications

1. Dispositif de guidage pour une ligne, en particulier pour une chaîne de guidage d'énergie, qui est déplaçable de manière à ce qu'un premier tronçon puisse être positionné au-dessus d'un second tronçon et que les deux tronçons soient reliés par une partie en arc de cercle, dans lequel le dispositif de guidage a des parois de guidage (2, 3) pour guider le premier et/ou le second tronçon, qui comprennent, au moins dans une zone, des éléments muraux (4, 5) latéralement opposés, formés d'une seule pièce en plastique et qui ont respectivement deux extrémités (6, 7) opposées dans la direction longitudinale de l'élément mural (4, 5), définie par la direction longitudinale du dispositif de guidage, un côté extérieur (8) tourné vers l'extérieur de l'élément mural latéralement opposé (4, 5), un côté intérieur (9) tourné vers l'élément mural latéralement opposé (4, 5) et comportant une zone de guidage pour la ligne, ainsi qu'un côté supérieur (10) et un côté inférieur (11) plus étroits par rapport au côté extérieur et au côté intérieur (8, 9), au moins deux éléments muraux directement adjacents (4, 5) qui, dans leurs régions frontales se faisant face, ont des moyens de fixation formés d'un seul tenant qui coopèrent sans l'interposition d'un autre moyen de fixation ou avec l'interposition d'un autre moyen de fixation pour fixer les deux éléments muraux directement adjacents (4, 5) l'un à l'autre,
dans lequel, pour connecter les moyens de fixation formés intégralement sur les régions frontales des éléments muraux (4, 5) se faisant face mutuellement sans l'interposition d'un autre moyen de fixation, l'un des moyens de fixation comporte une saillie (18) et l'autre des moyens de fixation comporte un évidement ou une ouverture, dans lequel ladite saillie s'engage (18) dans ledit évidement ou ouverture et la largeur de l'évidement ou de l'ouverture dans la direction longitudinale des éléments muraux (4, 5) est supérieure à la largeur de la saillie (18), de sorte qu'un mouvement des deux éléments muraux directement adjacents (4, 5) l'un par rapport à l'autre dans leur direction longitudinale peut avoir lieu sur une distance limitée prédéterminée, ou
dans lequel les moyens de fixation formés intégralement sur leurs régions frontales se faisant face sont reliés l'un à l'autre dans une relation de verrouillage positif avec l'interposition d'un autre moyen de fixation via un élément intermédiaire (15) comme autre moyen de fixation, les éléments muraux directement adjacents (4, 5) ont chacun une âme (14) sur leurs régions frontales se faisant face dans la région de leurs faces inférieures, à l'extrémité avant de ladite âme faisant face à l'élément mural directement adjacent (4, 5), une saillie (18) est disposée et une saille (18) s'étend autour de la saillie (18) sur son côté orienté vers l'intérieur (9) et à l'opposé de l'extrémité (6) de l'élément mural (4, 5), dans lequel une zone d'engagement (17) de l'élément intermédiaire (15) s'enclenche, et les saillies (18) des éléments muraux directement adjacents (4, 5) s'engagent dans un évidement prévu sur la face inférieure de l'élément intermédiaire (15) ou dans une ouverture traversante (19) s'étendant de la face inférieure de l'élément intermédiaire (15) jusqu'à son côté supérieur, la largeur de l'évidement ou de l'ouverture traversante (19) dans la direction longitudinale des éléments muraux (4, 5) étant supérieure à la largeur de l'évidement ou de l'ouverture traversante (19) dans la direction longitudinale de l'élément mural (4, 5), 5) est plus large que la largeur occupée par les deux saillies (18) lorsque les extrémités avant des éléments muraux directement adjacents (4, 5) s'appuient l'une contre l'autre, de sorte qu'un mouvement des deux éléments muraux (4, 5) l'un par rapport à l'autre dans leur direction longitudinale peut avoir lieu sur une distance limitée prédéterminée.

2. Dispositif de guidage selon la revendication 1, **caractérisé en ce que** la hauteur de la saillie (18) formée sur l'âme respective (14) correspond à la profondeur de l'évidement sur la face inférieure de l'élément intermédiaire (15) ou à la longueur de l'ouverture traversante (19) s'étendant de la face inférieure de l'élément intermédiaire (15) à sa face supérieure et la profondeur de l'évidement (16) s'étendant autour de la saillie (18) dans l'âme (14) correspond à la hauteur de la zone d'engagement (17) s'étendant autour de l'évidement (16) dans l'élément intermédiaire (15), les côtés supérieurs de la saillie (18), la zone d'engagement (17) et éventuellement d'autres zones de l'âme (14) forment une surface de contact plane et essentiellement continue pour la ligne.

3. Dispositif de guidage selon la revendication 1 ou 2, **caractérisé en ce que** les évidements (16) dans les âmes (14) s'étendent au moins partiellement sous la zone de guidage des côtés intérieurs (9) des éléments muraux (4, 5) et que la zone d'engagement (17) de l'élément intermédiaire (15) s'engage en dessous avec une saillie.

4. Dispositif de guidage selon la revendication 3, **caractérisé en ce que** la saillie se présente sous la forme d'une languette à ressort (20).

5. Dispositif de guidage selon l'une des revendications 1 à 4, **caractérisé en ce que** la saillie (18) disposée dans la zone d'extrémité avant de la barre (14) présente sur son côté éloigné du côté intérieur (9) des éléments muraux (4, 5) un nez (21) sous lequel, lorsque l'élément intermédiaire (15) est fixé sur les saillies adjacentes (18), une saillie de verrouillage (22) disposée dans le renfoncement prévu sur la face inférieure de l'élément intermédiaire (15) ou l'ouverture traversante (19) prévue dans l'élément intermédiaire (15) vient s'engager.

6. Dispositif de guidage selon l'une des revendications 1 à 5, **caractérisé en ce que** l'élément intermédiaire (15) se présente sous la forme d'une zone d'extrémité d'un élément transversal intégral (23) reliant des éléments muraux (4, 5) mutuellement opposés.

7. Dispositif de guidage selon l'une des revendications 1 à 6, **caractérisé en ce que** des moyens de fixation supplémentaires sont formés dans les régions frontales mutuellement adjacentes des éléments muraux directement adjacents (4, 5), lesdits moyens de fixation coopérant dans une relation de verrouillage positif de telle sorte qu'un mouvement d'éloignement des éléments muraux directement adjacents (4, 5) dans la direction longitudinale de ceux-ci peut avoir lieu.

8. Dispositif de guidage selon la revendication 7, **caractérisé en ce que** les moyens de fixation supplémentaires comprennent des moyens de rainure et de languette (25).

9. Dispositif de guidage selon l'une des revendications 1 à 8, **caractérisé en ce que** les moyens de fixation pour la fixation longitudinale déplaçable des éléments muraux directement adjacents (4, 5) sur une distance limitée prédéterminée forment des seconds moyens de fixation (13) et que les régions frontales mutuellement éloignées des éléments muraux (4, 5) sont des premiers moyens de fixation (12) formés intégralement qui servent à s'appuyer contre les premiers moyens de fixation (12) d'un élément mural (4, 5) directement adjacent à ladite extrémité frontale, et à les fixer sans jeu à ces derniers.

10. Dispositif de guidage selon la revendication 9, **caractérisé en ce que** les premiers moyens de fixation (12) sont disposés pour s'étendre latéralement à l'extérieur des extrémités (7) et des zones de guidage, servant à guider la ligne, des côtés intérieurs (9) des éléments muraux (4, 5).
